# DEMANDE DE BREVET EUROPEEN

(11) **EP 2 095 995 A1**
(43) Date de publication de la demande: **02.09.2009**
(21) Numéro de dépôt: 09151981.9
(22) Date de dépôt: 03.02.2009
(51) Int. Cl.: B60Q 1/04

(54) **Ensemble avant de véhicule automobile comprenant un projecteur avant**

(30) Priorité: 29.02.2008 FR 0851320
(71) Demandeur: PEUGEOT CITROËN AUTOMOBILES SA, 78140 Velizy-Villacoublay (FR)
(72) Inventeur: Claret, Davy, 91620, Nozay (FR); Duvivier, Arnaud, 91120, Palaiseau (FR); Tanguy, Thierry, 75020, Paris (FR)

(57) **Abrégé**

Cet ensemble avant (2) comprend :
- une partie structurelle (4) ;
- un projecteur avant (6) comprenant un corps (12) ;
- des moyens de liaison (16, 18, 20) du corps (12) avec la partie structurelle, propres à assurer ensemble la fixation du corps sur la partie structurelle ; et
- une pièce de carrosserie (8) propre à être fixée sur la partie structurelle.

Les moyens de liaison comprennent une première liaison (16) couverte par la pièce de carrosserie et propre à bloquer le corps (12) en translation suivant une première direction (Z) et à assurer une liberté en translation suivant une deuxième et une troisième directions (X) orthogonales entre elles et à la première direction (Z). Le corps (12) est ainsi mobile, tout en maintenant la pièce de carrosserie (8) fixée, entre une position de fonctionnement et une position de libération du projecteur.

## Description

La présente invention concerne un ensemble avant de véhicule automobile, du type comprenant :
- une partie structurelle de véhicule automobile ;
- un projecteur avant comprenant un corps dans lequel est logée au moins une source de lumière ;
- des moyens de liaison du corps du projecteur avec la partie structurelle, les moyens de liaison étant propres à assurer ensemble la fixation du corps du projecteur sur la partie structurelle ; et
- une pièce de carrosserie propre à être fixée sur la partie structurelle,
les moyens de liaison comprenant une première liaison couverte par la pièce de carrosserie, la première liaison étant propre à bloquer le corps du projecteur en translation suivant une première direction.

On connaît des projecteurs avant de véhicule automobile montés sur la caisse du véhicule préalablement au pare-chocs avant et fixés sur la caisse au moyen de trois liaisons par vissage.

L'une de ces vis est couverte par le capot et reste donc accessible par ouverture du capot, tandis que les deux autres vis sont couvertes par le pare-chocs avant et sont donc cachées et non accessibles. Le démontage du projecteur nécessite ainsi de démonter le pare-chocs avant pour accéder aux deux vis cachées.

Le montage et le démontage du projecteur est donc long et coûteux.

Un but de l'invention est de fournir un dispositif permettant un montage et un démontage rapides du projecteur.

A cet effet, l'invention a pour objet un ensemble avant du type précité, c**aractérisé en ce que** la première liaison est propre à assurer au corps du projecteur une liberté en translation suivant une deuxième direction orthogonale à la première direction, et suivant une troisième direction orthogonale à la première direction et à la deuxième direction, le corps du projecteur étant ainsi mobile, tout en maintenant la pièce de carrosserie fixée sur la partie structurelle, entre une position de fonctionnement du projecteur dans laquelle les moyens de liaison sont propres à assurer la fixation du projecteur, et une position de libération du projecteur dans laquelle les moyens de liaison sont désengagés.

Suivant des modes particuliers de réalisation, l'ensemble avant comporte en outre une ou plusieurs des caractéristiques suivantes, prise(s) isolément ou suivant toutes les combinaisons techniquement possibles :
- la première liaison comprend un organe fixe solidaire d'une pièce comprise parmi la partie structurelle et le corps du projecteur et un organe mobile solidaire d'une autre pièce comprise parmi le corps du projecteur et la partie structurelle, l'organe fixe étant propre à bloquer en translation l'organe mobile suivant ladite première direction et à assurer à l'organe mobile une liberté en translation suivant lesdites deuxième et troisième directions ;
- les moyens de liaison comprennent une deuxième liaison propre à bloquer en translation le corps du projecteur suivant ladite première direction et suivant une direction perpendiculaire à un axe reliant la deuxième liaison à une troisième liaison ;
- la deuxième liaison comprend un organe mobile solidaire du corps du projecteur et un organe fixe solidaire de la partie structurelle, l'organe fixe étant propre à bloquer en translation l'organe mobile suivant ladite la direction et à assurer à l'organe mobile une liberté en translation suivant une direction perpendiculaire à la direction ;
- l'organe fixe délimite une encoche de réception de l'organe mobile, l'encoche comprenant un tronçon d'insertion de l'organe mobile s'étendant suivant la direction et un tronçon de blocage de l'organe mobile s'étendant suivant ladite première direction ;
- la deuxième liaison comprend un organe de verrouillage propre à bloquer en translation le corps du projecteur suivant ladite première direction, et à assurer au corps du projecteur une liberté en translation suivant une direction perpendiculaire à la direction ;
- l'organe de verrouillage est un coulisseau rapporté amovible, propre à s'insérer dans l'encoche et à bloquer ainsi l'organe mobile dans l'encoche, ce coulisseau présentant une saillie de déverrouillage accessible par un opérateur ;
- la première liaison et la deuxième liaison sont propres à assurer ensemble au corps du projecteur une liberté en rotation autour d'une direction perpendiculaire à un axe reliant la deuxième liaison à une troisième liaison et une liberté en translation suivant ladite direction ;
- les moyens de liaison comprennent une troisième liaison propre à bloquer le corps du projecteur en translation suivant ladite première direction, ladite deuxième direction et ladite troisième direction ; et
- la troisième liaison comprend des moyens de butée suivant ladite deuxième direction et ladite troisième direction, et des moyens de vissage suivant ladite première direction.

L'invention a également pour objet un véhicule automobile, **caractérisé en ce qu**'il comprend un ensemble avant tel que décrit ci-dessus.

L'invention sera mieux comprise à la lecture de la description qui va suivre, donnée uniquement à titre d'exemple, et faite en se référant aux dessins annexés, sur lesquels :
- la figure 1 est une vue de devant en perspective d'un bloc avant de véhicule automobile, selon l'invention ;
- la figure 2 est une vue analogue à la figure 1, dans laquelle le pare-chocs avant du bloc avant n'est pas représenté ;
- la figure 3 est une vue latérale interne en perspective d'une liaison entre un projecteur du bloc avant des figures 1 et 2 et une partie structurelle du bloc avant ;
- la figure 4 est une vue arrière en perspective d'une autre liaison entre le projecteur et la partie structurelle du bloc avant des figures 1 et 2 ; et
- la figure 5 est une vue arrière en perspective illustrant une étape du montage du projecteur et de la mise en prise de la liaison de la figure 4.

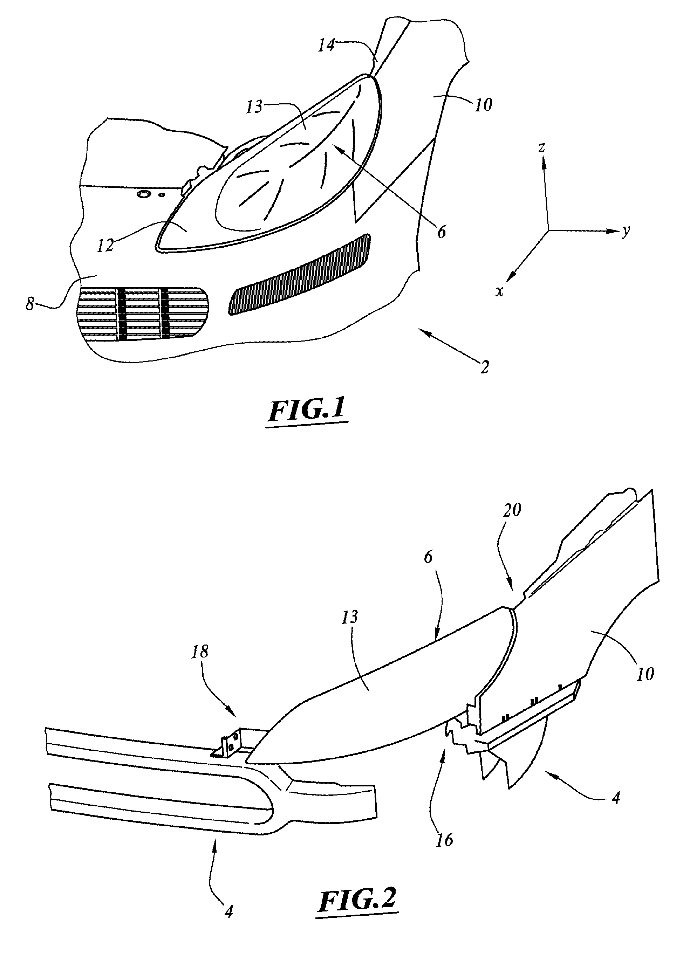

Les figures 1 et 2 illustrent un ensemble avant 2 de véhicule automobile comprenant une partie structurelle de caisse 4, un projecteur avant 6 fixé sur la partie structurelle 4 dans une position de fonctionnement, ainsi qu'un pare-chocs avant 8 et une aile avant 10 fixés sur la partie structurelle 4 et bordant tout deux le projecteur 6. Le projecteur 6 est également bordé par un capot de couverture du moteur (non représenté). Le capot est, sur les figures 1 et 2, dans une position ouverte d'accès au moteur.

Le projecteur 6 comprend un corps 12 dans lequel sont logées des sources lumineuses (non représentées), le corps 12 présentant une face avant transparente et incurvée 13 de telle sorte que son bord suit la courbure des surfaces adjacentes de l'aile 10, du pare-chocs 8 et du capot.

Le projecteur 6 est fixé sur la partie structurelle 4 au moyen de trois liaisons intermédiaire 16, avant 18 et arrière 20.

Dans la suite de la description, les termes "longitudinal", "transversal", "avant", "arrière", "haut", "bas", "droite", "gauche", s'entendent par référence aux repère orthogonal usuel des véhicules automobiles, comprenant :
- un axe longitudinal X, horizontal et orienté de l'arrière vers l'avant,
- un axe transversal Y, horizontal et orienté de la droite vers la gauche, et
- un axe vertical Z, orienté du bas vers le haut.

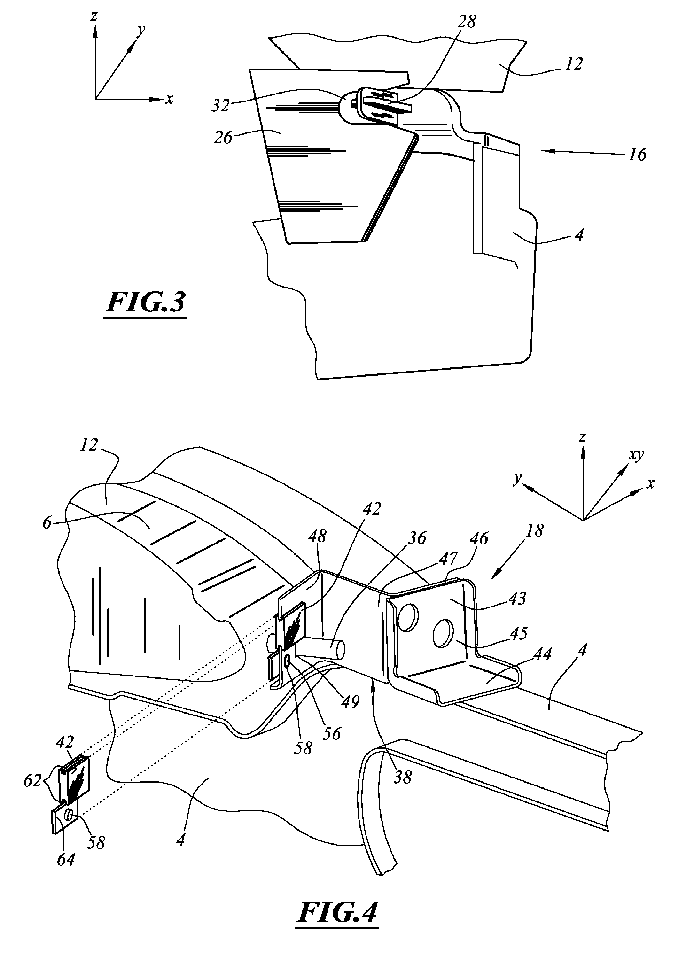

La liaison intermédiaire 16, ou première liaison, est visible sur la figure 2 et illustrée plus en détail sur la figure 3. Elle est réalisée au moyen d'une patte d'appui 26 en forme de plaque s'étendant sensiblement suivant un plan ZX et solidaire du corps 12 du projecteur 6, et au moyen d'un doigt horizontal de support 28, sensiblement d'axe Y et solidaire de la partie structurelle 4. Le doigt 28 est propre à être inséré dans une encoche 32 horizontale ménagée dans la patte 26. La patte 26 est montée coulissante sur le doigt 28 suivant les directions X et Y et bloquée en translation suivant l'axe Z. La patte 26, et donc le corps 12 du projecteur, est libre en rotation sur le doigt 28 autour des directions Y et Z, et possède un léger débattement en rotation autour de la direction X . L'encoche 32 est ouverte vers l'avant pour le montage de la patte 26 sur le doigt 28 par un déplacement vers l'avant, et a une forme sensiblement rectangulaire s'étendant suivant la direction X et possédant un fond arrondi.

Le doigt 28 a, dans l'exemple illustré, une section en forme de croix lui conférant une rigidité importante. Il est par exemple réalisé en matériau plastique et monté solidaire à la partie structurelle 4 par l'intermédiaire d'un moyen de fixation associé de type connu.

La liaison intermédiaire 16 réalise ainsi un blocage du corps 12 du projecteur 6 en translation suivant la direction Z par rapport à la partie structurelle 4 tout en conférant au corps 12 du projecteur 6 une liberté en translation suivant les directions X et Y par rapport à la partie structurelle 4.

En outre, la liaison intermédiaire 16 est propre à assurer au corps 12 du projecteur 6 une liberté de rotation autour des directions Y et Z ainsi qu'un léger débattement en rotation autour de la direction X .

Dans une variante de réalisation, le doigt 28 est rendu solidaire du projecteur 6 tandis que la plaque d'appui 26 comportant l'encoche 32 est conformée dans la partie structurelle 4.

La liaison avant 18, ou deuxième liaison, illustrée plus en détail sur la figure 4, consiste en une liaison pivot glissante sensiblement d'axes X et Y. Cette liaison 18 est réalisée au moyen d'un doigt d'appui 36 solidaire du corps 12 du projecteur 6, d'une patte de support et de renvoi d'angle 38 solidaire de la partie structurelle 4, et d'un coulisseau de verrouillage 42.

La patte de support 38 est montée solidaire d'une équerre 43 par un moyen de fixation de type connu utilisant par exemple des vis de fixation ou au moins un point de soudure. L'équerre 43 forme une plaque horizontale 44 soudée sur la partie structurelle 4, et une plaque verticale 45 s'étendant sensiblement suivant un plan s'étendant parallèlement à l'axe Z.

La patte de support 38 a une forme de Z allongé. Elle comporte ainsi :
- une plaque de fixation 46 s'étendant suivant un plan parallèle à la plaque verticale 45 de l'équerre 43 et fixée par soudage sur celle-ci ;
- une plaque intermédiaire 47 s'étendant sensiblement suivant un plan YZ; et
- une plaque de support 48 du doigt 36, s'étendant sensiblement suivant un plan d'inclinaison par rapport au plan XZ, selon une rotation autour de l'axe Z afin d'orienter la plaque 48 vers l'extérieur du véhicule.

La plaque 48 s'étend de façon sensiblement parallèle à un plan d'axe vertical selon la direction Z et horizontal selon une direction XY sensiblement perpendiculaire à un axe (non représenté) reliant les liaisons avant 18 et arrière 20 qui définissent des points d'isostatisme.

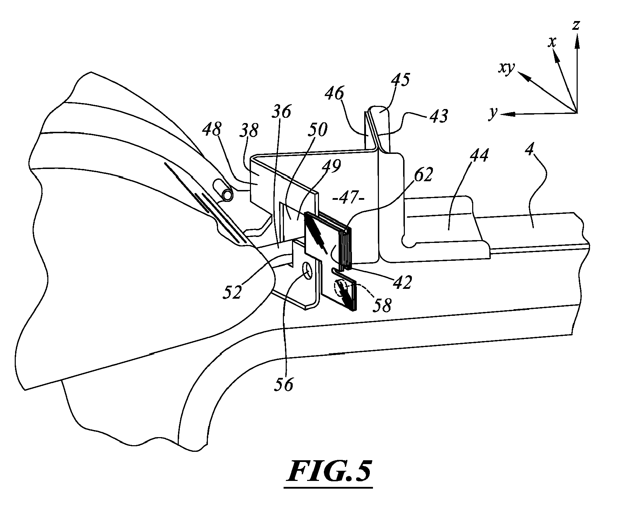

La plaque de support 48 de la patte de support 38 délimite une encoche 49 de réception du doigt 36 (figure 5).

L'encoche 49 a une forme générale en L et comprend ainsi un tronçon d'insertion 50 ouvert vers l'arrière, s'étendant horizontalement suivant l'axe XY susmentionné , et un tronçon de blocage 52 s'étendant suivant la direction Z vers le bas et prolongeant le tronçon d'insertion 50. Le tronçon de blocage 52 forme le fond de l'encoche 48 et assure le blocage du doigt 36 en translation suivant l'axe XY. Le tronçon 50 et le deuxième tronçon 52 ont une forme sensiblement rectangulaire.

Le coulisseau de verrouillage 42 est une pièce rapportée et amovible adaptée pour verrouiller le doigt 36 dans le fond de l'encoche 48, et ainsi bloquer en translation le doigt 36 suivant la direction Z.

En outre, la patte de support 38 comprend, à l'arrière du tronçon 52, un orifice de verrouillage 56 d'axe XY adapté pour coopérer avec un ergot de verrouillage 58 correspondant prévu sur le coulisseau 42.

Le coulisseau de verrouillage 42 est adapté pour coulisser dans le tronçon 50 de l'encoche 48, et comprend à cet effet deux fentes de coulissement opposées 62 s'étendant suivant la direction X et adaptées pour coopérer chacune avec un bord correspondant du tronçon 50 de l'encoche 48.

En outre, le coulisseau 42 comprend une patte élastique 64 inférieure et arrière portant l'ergot de verrouillage 58 sur sa face intérieure. La patte élastique 64 s'étend sensiblement suivant un plan d'axe vertical selon la direction Z et horizontal selon la direction XY, parallèlement aux fentes 62, tout en étant légèrement décalée suivant Y, vers l'extérieur par rapport aux fentes 62.

Dans la position de verrouillage du doigt 36 par le coulisseau 42, la patte 64 fait saillie vers l'arrière par rapport à la patte de support 38, de telle sorte qu'elle est adaptée pour la saisie et l'actionnement du coulisseau 42 par un opérateur.

L'ensemble du coulisseau 42 est par exemple moulé par injection de matière plastique.

La patte d'appui 26 ainsi que le doigt d'appui 36 sont par exemple moulés par injection de matière plastique et venus de matière avec le corps 12 du projecteur 6.

La liaison arrière 20, ou troisième liaison (figure 2) est réalisée par vissage. A cet effet, le corps 12 comprend une patte d'appui horizontale 66 solidaire du corps 12 du projecteur 6 et adaptée pour prendre appui sensiblement suivant un plan XY sur la partie structurelle 4. La patte 66 a en outre une forme adaptée pour une retenue par la partie structurelle 4 suivant les directions X et Y. A cet effet, la patte 66 a une forme de cuvette semi-parallélépipédique ouverte vers le bas dont le fond s'étend suivant un plan XY et dont les bords s'étendent suivant des plans XZ et YZ.

La patte d'appui 66 est ensuite fixée sur la partie structurelle 4 par vissage suivant l'axe Z.

Les trois liaisons 16, 18, 20 permettent un montage et un démontage rapides du projecteur 6, sans démonter le pare-chocs 8.

Pour le montage du projecteur 6, l'opérateur déplace le projecteur 6 vers l'avant suivant X et vers l'intérieur du véhicule suivant Y, de manière à insérer le doigt d'appui 36 dans l'encoche 48 de la patte de support 38, et ce jusqu'à ce que le doigt 36 soit logé dans le deuxième tronçon 52 de l'encoche 48 et repose sur le fond de l'encoche 48, comme cela est illustré en figure 5. Le doigt d'appui 36 est alors en outre bloqué dans la direction de l'axe Z.

L'opérateur déplace par la suite le projecteur 6 vers le côté suivant Y afin d'engager l'encoche 32 de la patte d'appui 26 sur le doigt de support 28 et bloquer ainsi en translation la patte d'appui 26 suivant l'axe Z tout en laissant la patte 26 libre en translation suivant les axes X et Y et libre en rotation autour des axes Y et Z, avec un léger débattement autour de l'axe X.

L'opérateur insère ensuite le coulisseau de verrouillage 42 dans le premier tronçon 50 de l'encoche 48 jusqu'à ce que l'ergot de verrouillage 58 vienne en prise dans l'orifice correspondant 56. Le doigt d'appui 36 est alors en outre bloqué dans la direction de l'axe Z.

La liaison 18 est ainsi pivot glissante d'axe passant pas les points de liaison 18 et 20.

Avec les deux liaisons 16 et 18, le corps 12 du projecteur 6 est alors bloqué en translation dans les deux directions X et Z, et bloqué en rotation autour des axes X et Z.

Enfin, l'opérateur pose la patte d'appui 66 sur la partie structurelle 4, puis réalise son vissage avec la partie structurelle 4. Les moyens de butée de la patte 66 bloquent la translation du corps 12 du projecteur 6 suivant les directions X et Y. Le vissage supprime le dernier degré de liberté en rotation autour de l'axe Y.

Le projecteur est ainsi fixé de manière isostatique dans sa position de fonctionnement.

Pour le démontage du projecteur 6, l'opérateur dévisse la patte d'appui 66. Il retire également le coulisseau de verrouillage 42 en saisissant l'extrémité arrière de la patte 64 de manière à dégager l'ergot 58 de l'orifice 56, tout en exerçant sur le coulisseau un effort de traction vers l'arrière.

Une fois ces opérations effectuées, l'opérateur dégage la patte 26 du doigt 28 puis sort le doigt d'appui 36 de l'encoche 48.

Le projecteur 6 est alors dans une position de libération et de remplacement. Cette position est également adaptée au changement des sources lumineuse logées dans le corps 12 du projecteur 6, ce qui n'est notamment pas possible dans la position de fonctionnement du projecteur 6.

Pendant les opérations de montage et de démontage du projecteur 6, le pare-chocs 8 et l'aile avant 10 restent fixés sur la partie structurelle 4. Il n'est pas nécessaire de les retirer, bien que le pare-chocs avant 8 empêche un accès par l'avant aux deux liaisons 16 et 18.

En outre, si le pare-chocs avant 8 n'est pas retiré, la liaison 16 est inaccessible pour un opérateur, même par l'arrière. Cette inaccessibilité n'est pas gênante grâce à l'engagement et au désengagement de la liaison 16 par simple déplacement du projecteur 6.

Le remplacement du projecteur avant 6 ou des sources lumineuses qu'il comprend peut ainsi être effectué de manière rapide et nécessite peu d'outillage. En effet, un simple tournevis suffit.

En outre, les liaisons intermédiaires 16 et avant 18 ne nécessitant pas d'opération de vissage, le montage en usine du projecteur 6 est également relativement rapide. Ces liaisons 16 et 18 ne nécessitant pas de vis, les coûts de fabrication et de stockage sont faibles.

Enfin, la géométrie de l'encoche 48 facilite le montage du projecteur 6, le premier tronçon 50 s'étendant suivant une direction horizontale et facilitant ainsi un accostage du projecteur 6 depuis l'arrière.

## Revendications

1. Ensemble avant (2) de véhicule automobile, du type comprenant :
- une partie structurelle (4) de véhicule automobile ;
- un projecteur avant (6) comprenant un corps (12) dans lequel est logée au moins une source de lumière ;
- des moyens de liaison (16, 18, 20) du corps (12) du projecteur (6) avec la partie structurelle (4), les moyens de liaison (16, 18, 20) étant propres à assurer ensemble la fixation du corps (12) du projecteur (6) sur la partie structurelle (4) ; et
- une pièce de carrosserie (8) propre à être fixée sur la partie structurelle (4),
- les moyens de liaison (16, 18, 20) comprenant une première liaison (16) couverte par la pièce de carrosserie (8), la première liaison (16) étant propre à bloquer le corps (12) du projecteur (6) en translation suivant une première direction (Z),
la première liaison (16) étant propre à assurer au corps (12) du projecteur (6) une liberté en translation suivant une deuxième direction (Y) orthogonale à la première direction (Z), et suivant une troisième direction (X) orthogonale à la première direction (Z) et à la deuxième direction (Y), le corps (12) du projecteur (6) étant ainsi mobile, tout en maintenant la pièce de carrosserie (8) fixée sur la partie structurelle (4), entre une position de fonctionnement du projecteur (6) dans laquelle les moyens de liaison (16, 18, 20) sont propres à assurer la fixation du projecteur (6), et une position de libération du projecteur (6) dans laquelle les moyens de liaison (16, 18, 20) sont désengagés,
**caractérisé en ce que** les moyens de liaison (16, 18, 20) comprennent une deuxième liaison (18) qui comprend un organe de verrouillage (42) qui est du type d'un coulisseau rapporté amovible.

2. Ensemble avant (2) selon la revendication 1, **caractérisé en ce que** la première liaison (16) comprend un organe fixe (28) solidaire d'une pièce comprise parmi la partie structurelle (4) et le corps (12) du projecteur (6) et un organe mobile (26) solidaire d'une autre pièce comprise parmi le corps (12) du projecteur (6) et la partie structurelle (4), l'organe fixe (28) étant propre à bloquer en translation l'organe mobile (26) suivant ladite première direction (Z) et à assurer à l'organe mobile (26) une liberté en translation suivant lesdites deuxième et troisième directions (Y, X).

3. Ensemble avant (2) selon la revendication 1 ou 2, **caractérisé en ce que** les moyens de liaison (16, 18, 20) comprennent une deuxième liaison (18) propre à bloquer en translation le corps (12) du projecteur (6) suivant ladite première direction (Z) et suivant une direction (XY) perpendiculaire à un axe reliant la deuxième liaison (18) à une troisième liaison (20).

4. Ensemble avant (2) selon la revendication 3, **caractérisé en ce que** la deuxième liaison (18) comprend un organe mobile (36) solidaire du corps (12) du projecteur (6) et un organe fixe (38) solidaire de la partie structurelle (4), l'organe fixe (38) étant propre à bloquer en translation l'organe mobile (36) suivant ladite la direction (XY) et à assurer à l'organe mobile (36) une liberté en translation suivant une direction perpendiculaire à la direction (XY).

5. Ensemble avant (2) selon la revendication 4, **caractérisé en ce que** l'organe fixe (38) délimite une encoche (49) de réception de l'organe mobile (36), l'encoche (49) comprenant un tronçon d'insertion (50) de l'organe mobile (36) s'étendant suivant la direction (XY) et un tronçon de blocage (52) de l'organe mobile (36) s'étendant suivant ladite première direction (Z).

6. Ensemble avant (2) selon l'une quelconque des revendications 3 à 5, **caractérisé en ce que** la deuxième liaison (18) comprend un organe de verrouillage (42) propre à bloquer en translation le corps (12) du projecteur (6) suivant ladite première direction (Z), et à assurer au corps (12) du projecteur (6) une liberté en translation suivant une direction perpendiculaire à la direction (XY).

7. Ensemble avant (2) selon la revendication 6 prise ensemble avec la revendication 4, **caractérisé en ce que** l'organe de verrouillage (42) est un coulisseau rapporté amovible, propre à s'insérer dans l'encoche (49) et à bloquer ainsi l'organe mobile (36) dans l'encoche (49), ce coulisseau présentant une saillie de déverrouillage (64) accessible par un opérateur.

8. Ensemble avant (2) selon l'une quelconque des revendications précédentes, **caractérisé en ce que** la première liaison (16) et la deuxième liaison (18) sont propres à assurer ensemble au corps (12) du projecteur (6) une liberté en rotation autour d'une direction (XY) perpendiculaire à un axe reliant la deuxième liaison (18) à une troisième liaison (20)et une liberté en translation suivant ladite direction (XY).

9. Ensemble avant (2) selon l'une quelconque des revendications précédentes, **caractérisé en ce que** les moyens de liaison (16, 18, 20) comprennent une troisième liaison (20) propre à bloquer le corps (12) du projecteur (6) en translation suivant ladite première direction (Z), ladite deuxième direction (Y) et ladite troisième direction (X).

10. Ensemble avant (2) selon la revendication 9, **caractérisé en ce que** la troisième liaison (20) comprend des moyens de butée suivant ladite deuxième direction (Y) et ladite troisième direction (X), et des moyens de vissage suivant ladite première direction (Z).
